# EUROPEAN PATENT APPLICATION

(11) **EP 4 368 829 A1**
(43) Date of publication of application: **15.05.2024**
(21) Application number: 22207119.3
(22) Date of filing: 14.11.2022
(51) Int. Cl.: F03D 9/25, F03D 9/19

(54) **MODULAR PLUG AND PLAY CONTAINER - PARTICULAR FOR A HYDROGEN PRODUCTION PLANT IN CONNECTION TO A WIND TURBINE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The present invention relates to a linkage of ports (30) of a container (20) to outer ports (30'), where the container (20) comprises the operational parts to be powered by a wind turbine (1), and where the container ports (30) are connected to conduits for electrical and/or fluid communication to transport current, gas and/or liquids between operational parts and storages outside the container (20), wherein when linked the container and outer ports (30) are positioned in a sealed compartment (100).

## Description

### Field of invention

The present invention relates to connecting of a process container, the process container comprising input and/or output connections to be connected to site connections. The system is especially suitable for containers to be positioned in harsh conditions, such as at ocean and shore sites, where it would be exposed to weather and salt. The containers could comprise hydrogen production plants with electrical and fluid connections, where they are adapted to be positioned in relation to a wind turbine.

### Background

Using offshore wind turbines in power-to-X to run for example hydrogen production plants offer many benefits, such as quick supply of water, good wind conditions. The positioning of the turbines further lowers the risk of being at nuisance to inhabitants in the local area.

There are however also disadvantages. One major drawback is the relatively harsh environmental conditions of the ocean.

Often the production plants for generating hydrogen are positioned at a platform in connection with or close to the wind turbine. The production plant is connected to means for the exchange of fluids and gasses, and for the supply of electrical power from the wind turbine.

Exposing such connections to the environments however often makes them deteriorate, possible debris and salts will settle thereon. This reduces their lifetime and can make it difficult to disconnect and reconnect when a container needs to be exchanged.

### Summary of the invention

The scope of the present invention is to overcome these problems.

This scope is met by the subject matter according to the independent claim. Advantageous embodiments of the present invention are described by the dependent claims.

According to the invention, a linkage of first ports is provided of a container to second ports, where the container comprises the operational parts to be powered by a wind turbine, and where the first ports are connected to conduits for electrical and/or fluid communication to transport current, gas and/or liquids between operational parts and storages outside the container, wherein, when linked, the first and second ports are positioned in a sealed compartment. By positioning the connections in the compartment and seal them from the environmental conditions ensures they are at least substantially unaffected by the environments, and thus unspoiled when to be exchanged.

The second ports may be positioned at a plug interface adapted to fit into an opening of the container, where the plug interface reaches into the opening when the first and second ports are linked.

By making the plug interface fit into the opening ensures a correct alignment of the first ports to the second ports.

The plug interface may be formed with a sealing adapted to seal towards an inner surface of the opening, thereby sealing the opening and hence the compartment inner from the outside environments.

The plug interface could form a raised platform.

The first ports and/or the second ports may be formed at sections that, when linked, reaches a distance into the compartment inner.

The ports may be formed in flanged ends of the sections or may at least be formed in substantially plane contact surfaces at the ends of the sections.

A cover may form part of the sealing enclosure of the compartment, where the cover is removable or comprises openable ports allowing access from the outside to the ports.

The compartment may part the container and positioned between the container side walls.

The operational parts may include a hydrogen production plant.

The present invention further relates to the container comprising the linkage compartment according to any of the embodiments.

The present invention further relates to a method to link a container in connection to a wind turbine, the container comprising operational parts to be powered by the wind turbine, where linkage means are positioned within a compartment, and the linkage means of the container comprises first ports adapted to be linked to second ports, where the first ports are connected to conduits for electrical and/or fluid communication to transport current, gas and/or liquids between operational parts and storages outside the container, wherein the method includes to open or remove a cover of the compartment, link the first ports to the second ports, and replace or close the cover to seal the compartment.

The method could be using the linkage according to any of the embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic presentation of a wind turbine including a platform and containers positioned on the platform
- Figure 2: shows a container lifted from the platform exposing linkage means
- Figure 3A,B,C: shows linkage means according to an embodiment of the present invention
- Figure 4: shows a standard flanged and bolted linkage
- Figure 5: shows an embodiment with a sealed chamber inside the container
- Figure 6: shows and embodiment with the linkage means positioned at the outside of the bottom of the container
- Figure 7: shows a flow chart of the method according to the present invention

### Detailed Description

The illustrations in the drawings are schematic. It is noted that in different figures, similar or identical elements are provided with the same reference signs.

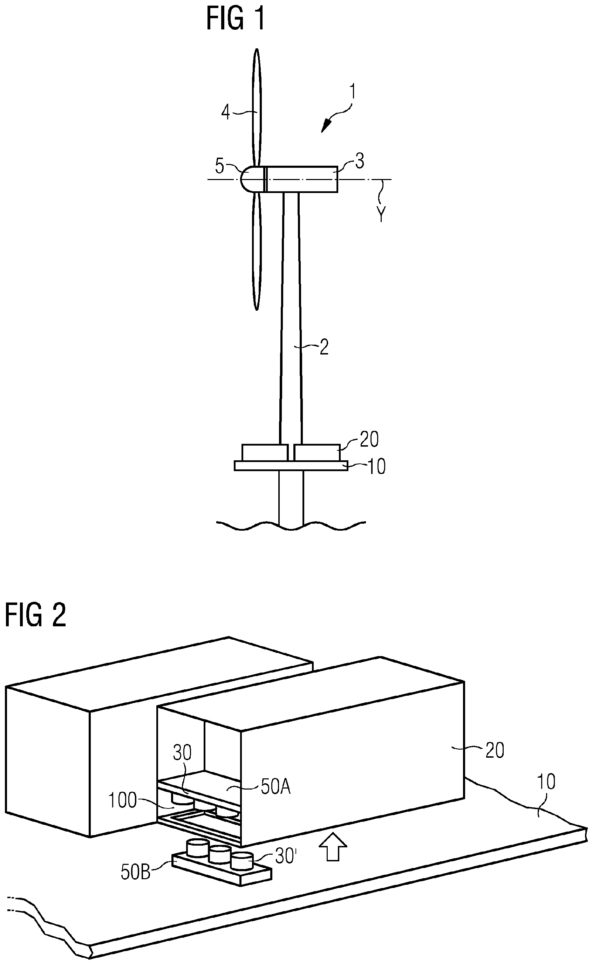

**Figure 1** shows an embodiment wind turbine 1 positioned in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a longitudinal rotation axis Y. The wind turbine 1 comprises an electric generator.

In the illustrated embodiment a platform 10 is positioned at the tower 2. The position of the platform 10 at the tower 2 could be such that it is generally above water despite waves and tides.

The platform 10 is adapted for containers 20 to be positioned and optionally fixed on its surface. In a non-exclusive manner the containers could comprise operational parts such as hydrogen production plant, but could be other systems, e.g., CO2 extraction machines, solar heating plants etc., in the following exampled as hydrogen producing plants each container including electrolyzers etc.

During use, the operational parts require a supply or exchange of fluid, gas and/or electricity. For that purpose, the containers 20 are formed with a set of ports 30 adapted to align with a matching set of platform ports 30' positioned at the surface of the platform 10.

**Figure 2** shows a platform 10 without disclosing the wind turbine 1 itself, and where one of the containers 20 has been lifted to expose a set of first ports 30 of the container 20 disconnected from a set of second ports 30' of the platform 10.

The ports 30, 30' in the embodiment works as 'plug-and-play' connections, the container 20 simply having to be positioned such that the first 30 and second 30' ports align. To ensure correct alignment, the platform 10 and/or the container 20 may have guiding means (not seen in the figures). Such guiding means would be adapted to ensure a correct alignment of the ports 30, 30'.

In the illustrated embodiment the first ports 30 are located between two sides of the container 20. The two sides may be the two long-sides in case the container has a longer length than width.

In some embodiments the container 10 end-wall is removable allowing an installer access to the first ports 30. During or before installing or removing the container 20, the end-wall of is opened or removed to expose the first ports 30' and allowing linkage when the first ports 30 are connected to the second ports 30', and once linked, the end-wall can be reinstalled or closed forming a compartment 100 within the container enclosing the linked ports 30, 30'.

In the present, the term 'end-wall' refers to the one of the two end-walls connecting the two side walls being near the first ports 30.

The end-wall in other embodiments is positioned between the first ports 30 and the operational parts positioned at the inside of the container 20. The ports 30 thus being positioned at the outside relative to the end-wall. This enables easy contact to the ports 30, 30' at any time, such as when there is only a little space to maneuver and open an end-wall.

The first ports 30 positioned between the side walls of the container 20 is within the cover of the container side walls and roof panel. At the bottom, the container 20 is open 40 in the section of the first ports 30, to allow contact between the first ports 30 and second ports 30'.

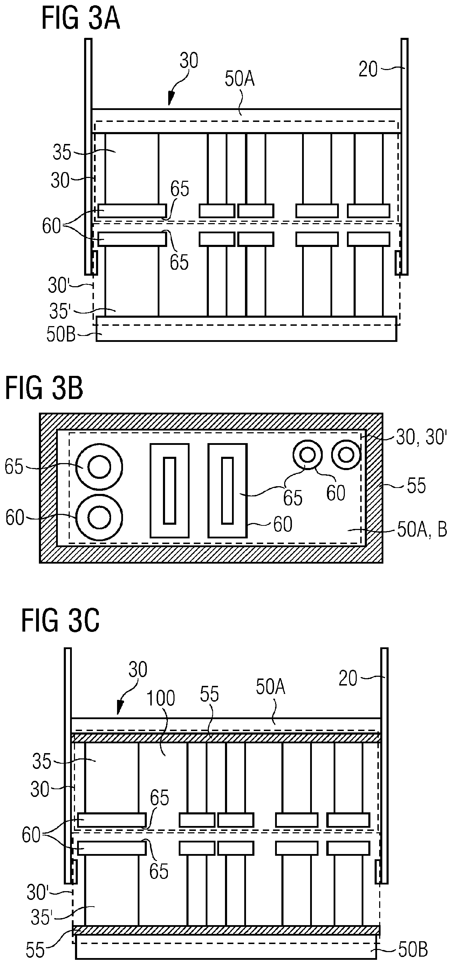

**Figure 3A, 3B, 3C** shows the ports 30, 30', which may be formed at the end of sections 35, 35' reaching out from the respectively container interface 50A and plug interface 50B. The sections 35, 35' form conduits, and are for example formed as hollow tubes.

The first ports 30 of the container 20 connected to the container interface 50A may be fixed to the two container 20 side walls as illustrated.

The first ports 30' in the illustration are positioned on the plug interface 50B, which in this embodiment forms a raised section relative to the surface level of the platform 10 itself. When installed, the cable carrier 50B then will reach into the opening 40 of the container 20 to create contact between the ports 30, 30'. Similarly, the second ports 30', and optional sections 35', reaches through the opening 40 and into the compartment 100.

The plug interface 50B may fit tightly into the opening 40, and together they form guiding means adapted to ensure correct alignment of the first 30 and second 30' ports.

The conduits may connect the operational parts within the container 20 to the first ports 30, either direct, some of the conduits and ports 30, 30' being the gas or liquid communications, or indirect, the conduits operating to contain and protect the electrical conductors and/or gas/fluid tubes or pipes from the environmental condition.

In one embodiment the conductors, pipes etc. may be dragged or pulled through the conduits. In another embodiment they form two parts. The first part then could be formed with a connector in the first port 30 area and the second with a connector in the second port 30' area. In this embodiment, the connectors then would be connected when linking the ports 30, 30' .

The ports 30, 30' include the means 60 to make a stable linkage of the first ports 30 and the second ports 30'.

In the embodiment of figs. 3A, 3B, 3C, the contact means 60 contact surfaces 65 is adapted to form the direct contact between the first ports 30 and second ports 30'. In the illustrated embodiment, the contact means 60 are formed as flanges of the sections 35, 35' at the perimeter of the ports 30, 30' .

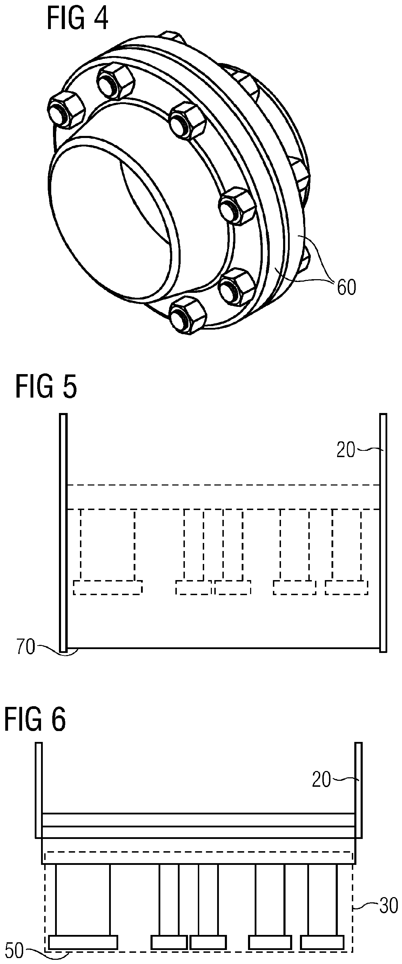

The flanges are formed with openings adapted for e.g., bolts and nuts, or screws, to link and secure the first ports 30 to the second ports 30'. Such a connection is also illustrated in **figure 4****.** It is to be said that other means of attaching two connections would also apply, like click-fit, threated connections etc.

In fig. 3B, a sealing 55 is seen positioned at the circumference of the first ports 30 and/or the second ports 30', such that they are sealed at the below from the environmental conditions.

This for example increases the lifetime of the parts, and ensure they are not being covered with salt and other particles.

Fig. 3B illustrates a different configuration of the ports 30, 30', and shows they can have different shapes and sizes etc.

The first ports 30 in the illustrated embodiment are 'inner' connections in the sense, they are positioned with their contact means 60, and/or contact surfaces 65, inside the compartment 10 at a distance to the compartment 100 bottom or opening 40. The distance may correspond to the heigh of the second ports 30' from the platform 10 surface.

When the container 20 is installed, the second port 30' contact means 60, and/or contact surfaces 65, reaches into the inside of the compartment 100 to contact the first ports 30.

In fig. 3C the container 20 is lifted revealing the set of first ports 30 and set of second ports 30', and the sealings 55 at the circumference of each of the sets, such as at the perimeter of respectively the container interface 50A and/or plug interface 50B.

If the end-wall for example is positioned at the inner side of the first ports 30, then the first ports 30 will be exposed at the side to environmental conditions, unless shieled in some manner.

**Figure 5** illustrates another embodiment, where a cover 70 is positioned inside the container 20 enclosing and covering the first ports 30 and the container interface 50A. The cover 70 shields the first ports 30 e.g., during transfer and mounting of the container 20, and are optionally also positioned during the use, such as during the generation of Hydrogen.

The cover 70 thus could form a seal towards externals. The cover 70 then may be removed when access to the first ports 30 is required.

The cover 70 together with e.g., sealings 55 as seen in fig. 3B forms a sealed 'plug-and-play' compartment 100, all the connections 60, 65 and ports 30, 30' being within the compartment when the container 20 is installed for use of the operational parts.

In either embodiment, the bottom opening 40 during e.g., transfer of the container 20 may be closed by a cover plate (not shown in the figure).

The 'plug-and-play' compartment 100 could enclose the first ports 30 and container interface 50A within a cover 70 could alternatively be connected the outside the container 20.

**Figure 6** illustrates an embodiment where the connections are positioned at the outside of the bottom of the container 20

In this embodiment the second ports 30' could be positioned at the lower side of the platform 10 surface, the container connections 20 reaching through an opening 40 in the platform surface 10.

In any of the embodiments, the second ports 30' could be covered with temporary covers when not in contact with container 20 first ports 30, such as by positioning a small temporary container to cover them, or a box or by other means positioned on top of the second ports 30'. This protects the inner parts from the environmental conditions.

In any of the embodiment the compartment 100 could be monitored by temperature sensors, thermal camera, gas sensor/alarm, humidity sensor etc. In general, by any suitable means adapted to register a leakage, such as during mounting and detachment of the container 20.

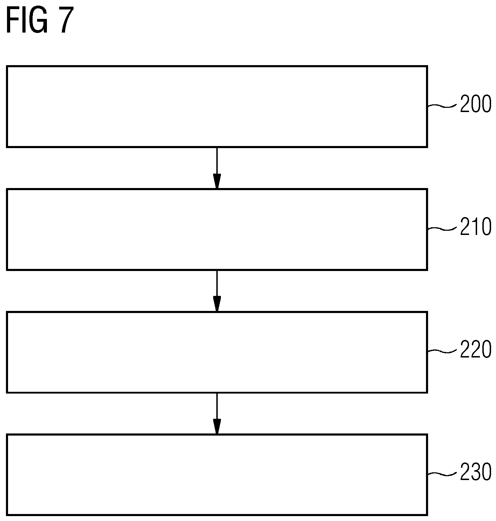

**Figure 7** shows a flow chart of the method to link a container 20 in connection to a wind turbine 1.

The method including to 200 provide linkage means first ports 30 within a compartment 100, to 210 open or remove a cover 70 of the compartment 100, to 220 link the first ports 30 to the second ports 30', and to 230 replace or close the cover 70 to seal the compartment 100.

## Claims

1. A linkage of first ports (30) of a container (20) to second ports (30'), where the container (20) comprises the operational parts to be powered by a wind turbine (1), and where the first ports (30) are connected to conduits for electrical and/or fluid communication to transport current, gas and/or liquids between operational parts and storages outside the container (20), wherein, when linked, the container and second ports (30') are positioned in a sealed compartment (100).

2. A linkage according to claim 1, wherein the second ports (30') are positioned at a plug interface (50B) adapted to fit into an opening (40) of the container (20), where the plug interface (50B) reaches into the opening (40) when the first and second ports (30, 30') are linked.

3. A linkage according to claim 2, wherein the plug interface (50B) is formed with a sealing (55) adapted to seal towards an inner surface of the opening (40).

4. A linkage according to claim 2 or 3, wherein the plug interface (50B) forms a raised platform.

5. A linkage according to any of the previous claims, wherein the first ports (30) and/or the second ports (30) are formed at sections (35, 35') that, when linked, reaches a distance into the compartment (100).

6. A linkage according to 5, wherein the ports (30, 30') are formed in flanged ends of the sections (35, 35').

7. A linkage according to claim 5 or 6, wherein the ports (30, 30') are formed in substantially plane contact surfaces (60) at the ends of the sections (35, 35').

8. A linkage according to any of the previous claims, wherein a cover (70) forms part of the sealing enclosure of the compartment (100) where the cover is removable or comprise openable ports allowing access from the outside to the ports (30, 30').

9. A linkage according to any of the previous claims, wherein the compartment (100) forms part the container (20) and is positioned between the container (20) side walls.

10. A linkage according to any of the previous claims, wherein the operational parts include a hydrogen production plant.

11. A container (20) comprising the linkage compartment (100) according to any of the claims 1-10

12. A method to link a container (20) in connection to a wind turbine (1), the container (20) comprising operational parts to be powered by the wind turbine (1), where linkage means are positioned within a compartment (100), and the linkage means of the container (20) comprises first ports (30) adapted to be linked to second ports (30'), where the first ports (30) are connected to conduits for electrical and/or fluid communication to transport current, gas and/or liquids between operational parts and storages outside the container (20), wherein the method includes to (210) open or remove a cover (70) of the compartment (100), to (220) link the first ports (30) to the second ports (30'), and (230) replace or close the cover (70) to seal the compartment (100).

13. A method to link a container (20) according to claim 12, using the linkage according to any of the claims 1-10.
